# EUROPÄISCHE PATENTSCHRIFT

(11) **EP 2 589 036 B1**
(45) Veröffentlichungstag und Bekanntmachung des Hinweises auf die Patenterteilung: **08.10.2014**
(21) Anmeldenummer: 11717961.4
(22) Anmeldetag: 29.04.2011
(51) Int. Cl.: G08G 1/0967, B60T 8/48, G01N 21/21, B60T 8/172, G01B 11/30

(54) **VORRICHTUNG UND VERFAHREN ZUR AUSGABE EINES SIGNALS BEI GEFÄHRLICHEM UNTERGRUND UNTER EINEM FAHRZEUG**
DEVICE AND METHOD FOR OUTPUTTING A SIGNAL WHEN THERE IS A HAZARDOUS UNDERLYING SURFACE UNDER A VEHICLE
DISPOSITIF ET PROCÉDÉ DE PRODUCTION D'UN SIGNAL EN CAS DE PRÉSENCE D'UNE CHAUSSÉE DANGEREUSE SOUS UN VÉHICULE

(30) Priorität: 30.06.2010 DE 102010025719
(43) Veröffentlichungstag der Anmeldung: 08.05.2013
(73) Patentinhaber: WABCO GmbH, 30453 Hannover (DE)
(72) Erfinder: BREUER, Karsten, 31867 Lauenau (DE); GERAMI-MANESCH, Bijan, 31303 Burgdorf (DE); HANSLIK, Daniel, 30916 Isernhagen (DE); HOFFMANN, Guido, 82216 Maisach (DE); SANDKÜHLER, Dirk, 30926 Seelze (DE)
(74) Vertreter: Lauerwald, Jörg
(86) Internationale Anmeldenummer: PCT/EP2011/002142
(87) Internationale Veröffentlichungsnummer: WO 2012/000579

(56) Entgegenhaltungen:
- EP-A2- 1 215 638
- DE-A1-102007 022 510
- DE-A1-102008 038 037
- US-A- 4 274 091
- US-A- 4 668 859
- US-A- 5 652 655
- US-A1- 2008 133 098

## Beschreibung

Die vorliegende Erfindung bezieht sich auf Sensoren zur Ausgabe eines Warnsignals in Abhängigkeit von der Fahrbahnbeschaffenheit unter einem Fahrzeug.

Zur Warnung vor Fahrbahnglätte oder anderen gefährlichen Fahrbahnzuständen verfügen moderne Kraftfahrzeuge meist standardmäßig über Außentemperatursensoren mit einer entsprechenden Anzeige, um dem Fahrer oder Fahrzeuginsassen einen Warnhinweis zu geben, wenn die Außentemperatur beispielsweise unter z.B. +3 °C sinkt. Damit soll vornehmlich der Fahrer vor dem Auftreten von möglicher Eisglätte oder winterlichen Straßenverhältnissen gewarnt werden. Solche Warnhinweise sind jedoch nur allgemeiner Natur und sind unabhängig vom tatsächlichen Fahrbahnzustand, so dass sie vom Fahrer und/oder einem Fahrzeuginsassen, wenn überhaupt, nur als Randinformation wahrgenommen werden. In der Praxis werden solche Temperaturhinweise häufig ignoriert.

Um Informationen über die sich tatsächlich unter dem Kraftfahrzeug befindende Fahrbahnoberfläche zu erhalten sind lichtbasierte optische Oberflächensensoren oder mechanische oder akustische Sensoren bekannt.

Diesen ist jedoch gemeinsam, nur zufriedenstellende Ergebnisse bereitstellen zu können, wenn sich das Fahrzeug bezüglich der Oberfläche bewegt.

Aus der gattungsgemäßen WO 2002/081250 A1 ist ein Verfahren und eine Vorrichtung zur Abgabe eines Warnsignals für den Fahrzeugführer bekannt, um diesen vor einem rutschigen Untergrund zu warnen. Die Auslösung der Warnung basiert auf an einem sich drehenden Rad ermittelten Schlupfwerten. Dieses System kann somit nur verwendet werden, wenn sich das Fahrzeug bewegt.

Die DE102008038037A1 beschreibt ein Verfahren und eine Vorrichtung zur fahrdynamischen Regelung eines Fahrzeuges, wobei die Fahrbahnbeschaffenheit mittels eines optischen Sensors ermittelt wird und anhand der Fahrbahnbeschaffenheit die Parameter einer Regelfunktion eines Fahrzeugbremssystems innerhalb eines vorbestimmten Fahrzeuggeschwindigkeitsbandes automatisch angepasst werden.

Die DE102007022510A1 beschreibt eine automatische Feststellbremse mit Schlupfregler, wobei bei Auftreten einer kritischen Fahrsituation eine radindividuelle Schlupfregelung durchgeführt wird, um ein gleichzeitiges Blockieren und somit den Verlust der Seitenführungskraft zu verhindern, indem bei einer Schlupfregelung an einem ersten Rad der Radschlupf eines zweiten Rades berücksichtigt wird.

Die US5652655 beschreibt eine Vorrichtung zur Ermittlung der Fahrbahnbeschaffenheit mittels eines optischen Sensors.

Viele Unfälle oder gefährliche Situationen ergeben sich jedoch, wenn das Fahrzeug angehalten wird und Insassen aussteigen oder das Fahrzeug bzw. gegebenenfalls Anhänger abgestellt werden sollen. Der vorliegenden Erfindung liegt daher die Aufgabe zugrunde für solche Situationen eine verbesserte Glättewarnung bereitzustellen.

### Zusammenfassung der Erfindung

Die Aufgabe wird gelöst durch eine Vorrichtung gemäß Anspruch 1 und durch ein Verfahren gemäß Anspruch 9 zur Ausgabe eines Signals bei gefährlichem Untergrund unter einem Fahrzeug.

Die Vorrichtung umfasst einen optischen Oberflächensensor zur Bestimmung zumindest eines Parameters des Untergrundes unter dem Fahrzeug, eine Stillstandsermittlungseinrichtung zur Ermittlung, ob das Fahrzeug steht oder zum Stillstand gebracht werden soll, und eine Ausgabeeinrichtung welche ein Signal ausgibt, wenn der Untergrund anhand des zumindest einen Parameters als gefährlich ermittelt wurde und das Fahrzeug still steht oder zum Stillstand gebracht werden soll.

Das Verfahren umfasst ein Aussenden von Licht zumindest einer Wellenlänge auf den Untergrund, ein Detektieren von an dem Untergrund reflektiertem Licht der zumindest einen Wellenlänge und ein Ermitteln anhand des detektieren reflektierten Lichts, ob der Untergrund gefährlich ist. Gleichzeitig oder zeitlich versetzt danach oder davor umfasst das Verfahren ein Ermitteln, ob das Fahrzeug steht oder zum Stillstand gebracht werden soll und ein Ausgeben eines Signals, wenn der Untergrund als gefährlich ermittelt wurde und ermittelt wurde, dass das Fahrzeug steht oder zum Stillstand gebracht werden soll.

Mit einer solchen Vorrichtung bzw. mit dem Verfahren können Fahrzeuginsassen, sowohl Fahrer als auch Fahrgäste oder Beifahrer vor dem Aussteigen durch das Signal, beispielsweise ein Warnsignal oder einen Warnton, davor gewarnt werden, dass sich unter dem Fahrzeug ein rutschiger oder ansonsten gefährlicher Untergrund befindet. In diesem Fall ist das von der Ausgabeeinrichtung ausgegebene Signal ein Warnsignal. Die Ausgabeeinrichtung kann eine Anzeigeeinrichtung zur Ausgabe des Warnsignals umfassen und kann beispielsweise in der Fahrzeugtür oder in der Nähe der Fahrzeugtür angeordnet sein, um einen Insassen des Fahrzeugs zu warnen bevor er bei einem gefährlichen Untergrund aus dem Fahrzeug aussteigt. Eine solche Anzeige kann sowohl in Personenkraftwagen, als auch in öffentlichen Transportmitteln wie Omnibussen, in Straßenbahnen oder Zügen vorgesehen sein.

Das Signal der Ausgabeeinrichtung kann auch ein Steuersignal sein, welches an eine zentrale Anzeigeeinrichtung, eine zentrale Fahrzeugsteuerung und/oder an weitere Elemente abgeben wird. Die weiteren Elemente können eine Türverriegelung, eine Anhängerkupplungseinrichtung oder andere Elemente sein.

Der Oberflächensensor kann an oder unter beziehungsweise im Bereich einer Fahrzeugtür angeordnet sein, um die tatsächliche Beschaffenheit der Fahrbahnoberfläche bzw. des Untergrundes im Bereich der entsprechenden Fahrzeugtüre zu erfassen.

Die Beschaffenheit der Fahrbahn bzw. des Untergrundes kann ein Zustand der Fahrbahnoberfläche, wie nass, trocken, vereist oder schneebedeckt oder eine Kombination daraus umfassen. Die Beschaffenheit kann ergänzend oder alternativ auch die Art der Fahrbahn oder Information über eine Rauhigkeit der Fahrbahn oder Fahrbahnoberfläche, wie Asphalt, Beton, Split oder Schotter oder eine Kombination daraus umfassen. Der gefährliche Untergrund kann ein rutschiger Untergrund wie ein eisglatter oder schneebedeckter Untergrund oder eine entsprechende Fahrbahnoberfläche sein. Der gefährliche Untergrund kann jedoch auch eine Wasserfläche beziehungsweise eine Pfütze oder ein weicher Untergrund wie Sand oder Gras sein.

Der optische Oberflächensensor kann über eine Lichtquelleneinheit zum Aussenden von Licht von zumindest einer Wellenlänge auf den Untergrund und zumindest einen Detektor umfassen, um von dem Untergrund reflektiertes Licht zu detektieren.

Der Oberflächensensor kann neben dem ersten Detektor einen zweiten Detektor umfassen, wobei der erste Detektor zum Erfassen von diffus reflektiertem Licht und der zweite Detektor zum Erfassen von spiegelnd reflektiertem Licht geeignet sind. Es können zumindest zwei Polarisatoren vorgesehen sein, wobei ein erster Polarisator mit einer ersten Polarisationseinrichtung dem ersten Detektor zugeordnet ist. Der Lichtquelleneinheit kann ein Lichtquellenpolarisator und/oder dem zweiten Detektor kann ein zweiter Polarisator zugeordnet sein, dessen Polarisierungsrichtung(en) im Wesentlichen senkrecht zu der ersten Polarisierungsrichtung des ersten Polarisators ausgerichtet ist/sind. Sind zumindest zwei Polarisatoren bzw. Polarisationsfilter vorgesehen, ist der erste Polarisator an dem ersten Detektor angeordnet, welcher nur Lichtwellen in der ersten Polarisationsrichtung zu dem ersten Detektor durchlässt. Ist ein Lichtquellenpolarisator an der Lichtquelleneinheit vorgesehen, ist dessen Polarisationsrichtung im Wesentlichen senkrecht zu der ersten Polarisationsrichtung des ersten Polarisators angeordnet, und das von dem Sensor ausgesandte Licht ist in einer Richtung im Wesentlichen senkrecht zu der ersten Polarisationsrichtung polarisiert, so dass an dem ersten Detektor polarisiertes, spiegelnd reflektiertes Licht herausgefiltert und nur diffus reflektiertes Licht detektiert wird. Ein ähnlicher Effekt kann erreicht werden, wenn ein zweiter Polarisator vor dem zweiten Detektor angeordnet ist, dessen Polarisationsrichtung im Wesentlichen senkrecht zu der ersten Polarisationsrichtung ausgerichtet ist. Der zweite Polarisator kann alternativ oder zusätzlich zu dem Lichtquellenpolarisator verwendet werden. Es kann auch vorgesehen sein, in der Lichtquelleneinheit bereits polarisiertes Licht zu erzeugen

Die Lichtquelleneinheit kann zum Aussenden von Licht von zumindest zwei voneinander verschiedenen Wellenlängen oder zum Aussenden von mehreren Wellenlängen auf den Untergrund bzw. die Fahrbahnoberfläche ausgelegt sein. Dazu kann die Lichtquelleneinheit beispielsweise mehrere Lichtquellen umfassen. Die Verwendung mindestens zweier, vorzugsweise drei von einander verschiedener Wellenlängen erlaubt es, den Sensor in spektraler Weise zu betreiben. Durch die Verwendung von Wellenlängen, welche z.B. von Eis oder Wasser besonders gut absorbiert werden, können Eis bzw. Wasser auf der Fahrbahn bzw. Fahrbahnoberfläche erkannt werden, wenn das reflektierte Licht der vom Wasser bzw. Eis absorbierten Wellenlänge mit dem einer Referenzwellenlänge verglichen wird. Es ist somit möglich, die Prinzipien der Spektralanalyse und der Diffus- und Spiegelndreflexion in nur einem Gerät, bzw. einem einzigen Gehäuse auszuführen. Die zumindest eine Lichtquelleneinheit, der erste Detektor und gegebenenfalls der zweite Detektor können dazu in einem gemeinsamen einzigen und/oder einstückigen Gehäuse beispielsweise unmittelbar nebeneinander angeordnet sein.

Es kann Licht in zumindest drei voneinander verschiedenen Wellenlängen im Infrarotbereich verwendet werden. Die Lichtquelleneinheit kann dazu mehrere Lichtquellen umfassen. Z.B. kann die Lichtquelleneinheit dazu ausgelegt sein, Infrarotlicht der Wellenlängen 1300 nm, 1460 nm und 1550 nm auszusenden. Während Licht der Wellenlänge 1460 nm besonders gut von Wasser absorbiert wird, wird Licht der Wellenlänge 1550 nm gut von Eis absorbiert. Licht im Bereich von ungefähr 1300 nm kann dann als Referenzwellenlänge verwendet werden. Es können jedoch auch andere Wellenlängen verwendet werden. Insbesondere für die Referenzwellenlänge kann jede andere Wellenlänge verwendet werden, welche weder von Eis noch Wasser nennenswert absorbiert wird. Als wassersensitive Wellenlänge kann auch jede andere Wellenlänge verwendet werden, welche in Wasser erhöht absorbiert wird. Genauso kann als eissensitive Wellenlänge jede Wellenlänge gewählt werden, welche in Eis erhöht absorbiert wird. Andere interessante Wellenlängen umfassen z.B. 1190, 1040, 970, 880 und 810 nm im Infrarotbereich, sowie die sichtbaren Wellenlängen 625, 530 und 470 nm.

Die Lichtquelleneinheit kann dazu ausgelegt sein, Licht genau drei verschiedener Wellenlängen auszusenden. Dazu kann die Lichtquelleneinheit drei Lichtquellen, eine Lichtquelle für jede Wellenlänge aufweisen. Es werden nur die drei Wellenlängen verwendet, um sowohl spektral als auch spiegelnd/diffus reflektiertes Licht zu erfassen, um sowohl die Fahrbahnbeschaffenheit als auch die Art der Fahrbahn zu ermitteln bzw. zu erkennen. Jede der Lichtquellen kann einzeln ansteuerbar und unabhängig von den anderen an- und abschaltbar sein bzw. in der Intensität regulierbar sein.

Darüber hinaus können auch mehr als die oben genannten zwei oder drei voneinander verschiedenen Wellenlängen verwendet werden. Beispielsweise kann die Wellenlänge 625 nm auch zur Messung des diffus und spiegelnd reflektierten Lichts verwendet werden.

Es kann weiterhin vorgesehen sein, das ausgesendete Licht in der Intensität bzw. Amplitude zu modulieren. Das Modulieren der Intensität oder Amplitude kann durch An- und Ausschalten aller oder einzelner Lichtquellen der Lichtquelleneinheit erfolgen. Das Modulieren der Intensität bzw. das An- und Abschalten kann für jede Wellenlänge der Lichtquelleneinheit oder für jede Lichtquelle der Lichtquelleneinheit separat erfolgen. Beispielsweise kann das Modulieren der Amplitude oder Intensität bzw. das An- und Abschalten für jede Wellenlänge mit der gleichen Frequenz, jedoch phasenverschoben und/oder mit unterschiedlichen Frequenzen erfolgen. Dadurch kann beispielsweise erreicht werden, dass das Licht unterschiedlicher Wellenlängen zeitlich versetzt oder sequentiell ausgesandt wird. Z.B. kann vorgesehen sein, Licht einer ersten Wellenlänge für ein bestimmtes Zeitintervall auszusenden, dann das Licht der ersten Wellenlänge abzuschalten und eine zweite Wellenlänge einzuschalten usw.. In den Detektoren wird dann jeweils Licht von nur einer Wellelänge detektiert. Dadurch kann eine spektrale Analyse oder Aufspaltung des einfallenden Lichts an den Detektoren vermieden werden. Es sind auch Mischformen verschiedener Modulationstechniken anwendbar, insbesondere frequenz- und amplitudenmodulierte optische Signalzüge mit oder ohne Unterbrechungen.

Die vorliegende Erfindung erlaubt es daher auch, einfache Detektoren als ersten oder zweiten Detektor zu verwenden. Beispielsweise können Photodioden verwendet werden. Der erste Detektor und der zweite Detektor können jeweils eine oder mehrere Photodioden umfassen. Zumindest der erste Detektor kann dazu ausgelegt sein, Licht aller von der Lichtquelleneinheit ausgesendeten Wellenlängen zu erfassen. Der Detektor kann auch alternativ oder ergänzend einen optoelektronischen Chip (z.B. CCD) oder eine andere optische Aufnahmeeinrichtung umfassen.

Der erste und der zweite Detektor können zur Erfassung bzw. zur Ermittlung von spiegelnd reflektiertem und diffus reflektiertem Licht verwendet werden. Zudem kann zumindest einer aus dem ersten und dem zweiten Detektor auch für die spektrale Ermittlung verwendet werden. Zumindest dieser Detektor ist dann dazu ausgelegt, Licht mehrerer Wellenlängen zu detektieren. In diesem Beispiel verfügt der Sensor über genau den ersten Detektor und den zweiten Detektor und es sind keine weiteren Detektoren vorgesehen.

Der Obertlächensensor kann ferner eine Auswerteinrichtung umfassen, welche eine Information über die Beschaffenheit der Fahrbahnoberfläche bzw. des Untergrunds ausgibt.

Die oben erwähnte Stillstandsermittlungseinrichtung zur Ermittlung, ob das Fahrzeug steht oder zum Stillstand gebracht werden soll dient dazu das Signal nur auszugeben, wenn es auch relevant ist. Die Stillstandsermittlungseinrichtung kann mit dem optischen Oberflächensensor verbunden sein, insbesondere mit der Auswerteinrichtung und Daten des optischen Oberflächensensors zur Stillstandsermittlung verwenden. Beispielsweise kann die Stillstandsermittlungseinrichtung die Lichtintensität über ein vorbestimmtes Zeitintervall erfassen. Wenn sich der Untergrund unter dem Fahrzeug nicht ändert, das Fahrzeug also still steht ändert sich die erfasste Lichtintensität nur innerhalb des System bedingten Fehlers, also innerhalb einer vorbestimmten Varianz. Bewegt sich das Fahrzeug bezüglich des Untergrunds, wird die Veränderung oder Varianz des reflektierten Lichtes größer und übersteigt den vorbestimmten Wert, so dass aus der erfassten Intensität des reflektierten Lichtes auf eine Fahrzeugbewegung geschlossen werden kann. Daher kann der Oberflächensensor als Datengeber für die Stillstandsermittlungseinrichtung verwendet werden bzw. die Stillstandsermittlungseinrichtung kann in dem Oberflächensensor integriert sein.

Es können jedoch andere Stillstandserkennungseinrichtungen mit der vorliegenden Erfindung verwendet werden, beispielsweise Geschwindigkeitssensoren die beispielsweise an den Rädern verwendet werden.

Beispielsweise kann die Stillstandsermittlungseinrichtung auch mit einer Haltestellenbremse eines Personenbeförderungsfahrzeugs, insbesondere einen Omnibusses kombiniert sein.

Es kann insbesondere vorgesehen sein, dass der Oberflächensensor in der Nähe einer Fahrzeugtür angeordnet ist und den Untergrund unter der Fahrzeugtür erfasst, so dass einem Fahrzeuginsassen ein Warnhinweis ausgegeben werden kann, wenn der Untergrund vor der Fahrzeugtür rutschig, nass und/oder auf andere Weise gefährlich ist. Die Anzeige kann als optisches Warnsignal an der Fahrzeugtür oder in der Nähe der Fahrzeugtür erfolgen, egal ob es sich bei dem Fahrzeug um einen Personenkraftwagen, einen Omnibus oder ein anderes Fahrzeug zur Personenbeförderung oder ein anderes Nutzfahrzeug handelt. Die Ausgabeeinrichtung kann auch einen Projektor umfassen, um beispielsweise ein Warnsignal auf dem Untergrund vor der Fahrzeugtür zu projizieren und so den aussteigenden Insassen oder Fahrgast entsprechend zu warnen.

Ein Warnsignal kann auch in der Nähe oder an einer Fahrzeugtür, insbesondere beispielsweise an dem Türöffner angebracht sein und ein Warnsignal oder eine optische Anzeige ausgeben, wenn der Untergrund gefährlich ist und/oder der Türöffner betätigt wird. Als Stillstandermittlung kommt diesbezüglich bei Personenkraftwagen auch das Lösen eines Anschnallgurtes in Betracht.

Die Ausgabeeinrichtung kann auch in der Nähe einer Kopplungseinrichtung für einen Fahrzeuganhänger angeordnet sein und ein Warnsignal kann ausgegeben werden um den Fahrzeugführer davor zu warnen einen Anhänger auf rutschigen Untergrund ab- oder anzukoppeln.

### Figurenbeschreibung

Im Folgenden werden weitere Einzelheiten und Beispiele der Erfindung lediglich beispielhaft und nicht einschränkend mit Bezug auf die beiliegenden Figuren angegeben, welche zeigen:
Figur 1 ein Fahrzeug mit einer erfindungsgemäßen Vorrichtung;
Figur 2 eine erstes Beispiel einer Vorrichtung gemäß der vorliegenden Beschreibung;
Figur 3 eine zweites Beispiel einer Vorrichtung gemäß der vorliegenden Beschreibung; und
Figur 4 schematisch ein erfindungsgemäßes Verfahren.

### Detaillierte Beschreibung

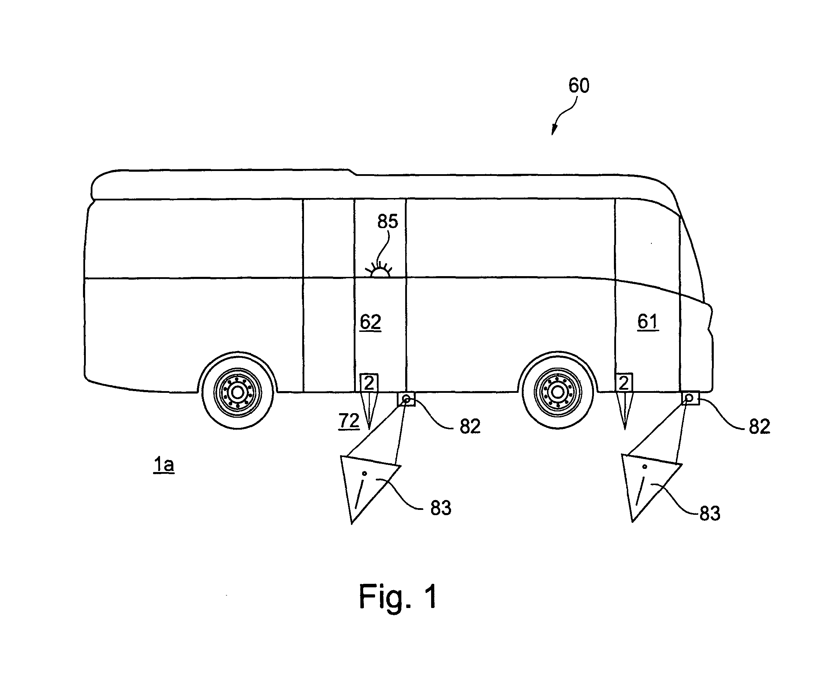

Figur 1 zeigt beispielhaft wie eine Vorrichtung 9 zur Ausgabe eines Signals bei gefährlichem Untergrund unter einem Fahrzeug 60 zur Personenbeförderung angeordnet werden kann. Das Fahrzeug 60 kann ein Omnibus oder ein anderes Fahrzeug zur Personenbeförderung sein. Bei dem Fahrzeug 60 kann es sich prinzipiell um jedes andere Fahrzeug handeln, beispielsweise schienengebundene Fahrzeuge, Personenkraftwagen oder andere Nutzfahrzeuge handeln. Der beispielhaft dargestellte Omnibus 60 verfügt über eine vordere Tür 61 und eine Tür 62, wie dies bei vielen Omnibussen 60 für den öffentlichen Nahverkehr oder den Fernreiseverkehr üblich ist. Die Anzahl der Türen und die Verwendung von Doppel- oder Einfachtüren kann dabei je nach Fahrzeug 60 variieren und es können weitere Türen, beispielsweise im hinteren Bereich des Fahrzeugs vorgesehen sein.

Im Bereich der vorderen Tür 61 und im Bereich der hinteren Tür 62 ist im dargestellten Beispiel jeweils eine erfindungsgemäße Vorrichtung 9 angebracht. Anstatt der vollständigen erfindungsgemäßen Vorrichtung 9 kann auch vorgesehen sein, lediglich bestimmte Elemente und Einrichtungen der Vorrichtung 9, beispielsweise einen Oberflächensensor 2 im Bereich der vorderen beziehungsweise hinteren Türen 61, 62 anzuordnen. Neben dem Oberflächensensor 2 kann auch ein Projektor 82 einer Ausgabeeinrichtung 8 im Bereich der Fahrzeugtüren 61, 62 angeordnet sein. Der Projektor 82 kann dazu ausgelegt sein ein Warnsignal 83 im Bereich vor den Fahrzeugtüren 61, 62 auf die Fahrbahnoberfläche 1a zu projizieren.

Das projizierte Warnsignal 83 wird von der Ausgabeeinrichtung 8 nur dann angezeigt, wenn das Fahrzeug 60 still steht oder zum Stillstand gebracht werden soll und wenn der Oberflächensensor 2 einen gefährlichen Untergrund 1 wie beispielsweise eine vereiste Fahrbahn 72, wie in der Figur 1 dargestellt, eine Wasserschicht 71, eine schneebedeckte Fahrbahn oder einen anderen für aussteigende oder zusteigende Fahrgäste gefährlichen Untergrund erkannt hat. Im Falle einer Wasserschicht 71 auf dem Untergrund kann der Oberflächensensor 2 das Warnsignal auch in Abhängigkeit von einer ermittelten Wassertiefe d1 ausgeben und so vor Pfützen oder anderen Wasseransammlungen warnen. Das Warnsignal 83 kann unterschiedliche Warnsymbole für einen nassen, vereisten und/oder verschneiten Untergrund und/oder weitere Symbole oder Schriftzeichen umfassen.

Alternativ oder ergänzend kann das Fahrzeug 60 auch über eine Warnanzeige 85 verfügen, welche in der Figur 1 beispielsweise in der hinteren Tür 62 dargestellt ist. Die Warnanzeige 85 kann eine Warnsymbol und/oder eine Warnfarbe haben und Fahrgäste vor dem Aussteigen auf einen gefährlichen Untergrund 1 aufmerksam machen. Die Warnanzeige 85 kann unterschiedliche Warnsymbole für einen nasse, vereiste und/oder verschneite Oberfläche 1a des Untergrunds 1 und/oder weitere Symbole oder Schriftzeichen umfassen. Die Warnanzeige 85 kann auch an anderen Stellen im Fahrzeug 60 angebracht werden, beispielsweise in der Nähe einer Kupplungsvorrichtung für einen Anhänger oder an dem Anhänger selbst, um vor einem Ab- und/oder Ankupplungsvorgang auf gefährlichem Untergrund zu warnen

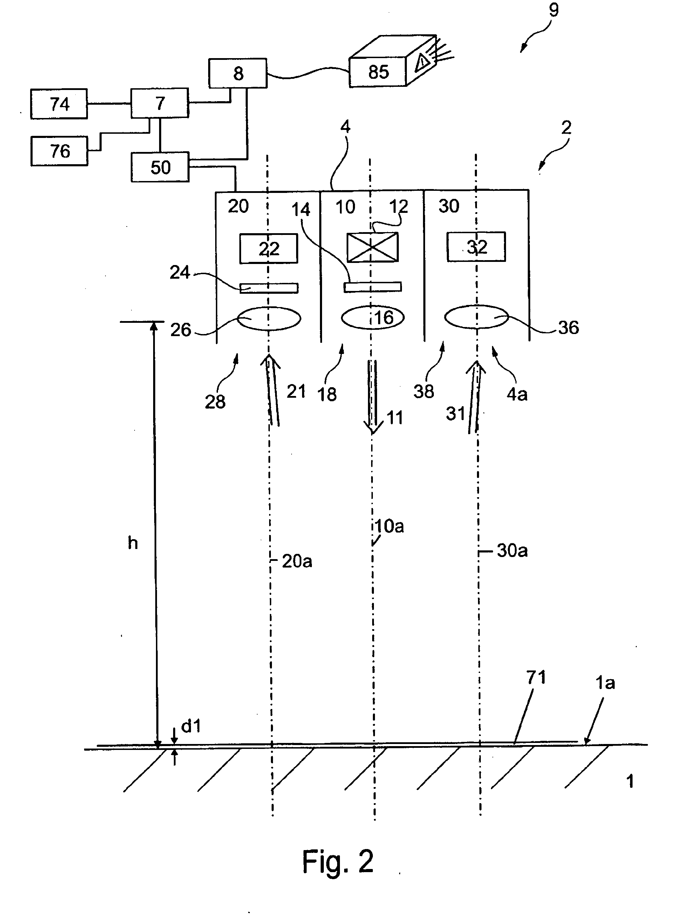

Die Figur 2 zeigt die Vorrichtung 9. Die Vorrichtung 9 verfügt über einen Oberflächensensor 2, eine Stillstandsermittlungseinrichtung 7 und eine Ausgabeeinrichtung 8. Der Oberflächensensor 2 umfasst eine Lichtemittereinrichtung 10 und zumindest eine erste Detektoreinrichtung 20. Im dargestellten Beispiel ist ferner eine zweite Detektoreinrichtung 30 vorgesehen. Der Oberflächensensor 2 kann ein handelsüblicher Oberflächensensor 2 sein, welcher zur optischen Erfassung der Fahrbahnbeschaffenheit der Fahrbahnoberfläche 1a ausgelegt ist.

Der Oberflächensensor 2 hierein auch als Sensors 2 zur Erkennung der Beschaffenheit, insbesondere eines Zustands und der Art der Oberfläche einer Fahrbahn 1 bzw. Fahrbahnoberfläche 1a bezeichnet, ist dazu ausgelegt, an einem Kraftfahrzeug 60 angebracht zu werden. Im dargestellten Beispiel befindet sich ein Wasserfilm 71 der Dicke d1 auf der Fahrbahnoberfläche 1a. Die Fahrbahnoberfläche kann jedoch auch schneebedeckt, vereist oder trocken sein oder eine andere Beschaffenheit haben.

Der Sensor 2 umfasst in einem Gehäuse 4 drei Einrichtungen, eine Lichtemittereinrichtung 10, eine erste Detektoreinrichtung 20 und eine zweite Detektoreinrichtung 30. Der Lichtemittereinrichtung 10 weist ein Lichtemitterfenster oder eine Lichtemitteröffnung 18 in dem Gehäuse 4 auf, die erste Detektoreinrichtung 20 weist ein erstes Detektorfenster oder eine erste Detektoröffnung 28 in dem Gehäuse 4 auf und die zweite Detektoreinrichutung 30 weist ein zweites Detektorfenster oder eine zweite Detektoröffnung 38 in dem Gehäuse 4 auf. Die Lichtemitteröffnung 18, die erste Detektoröffnung 28 und die zweite Detektoröffnung 38 sind an der gleichen Seite 4a des Gehäuses 4 angeordnet und zu der Fahrbahn 1 hin ausgerichtet, wenn der Sensor 2 betriebsbereit an einem Fahrzeug montiert ist. Der Sensor 2 ist so ausgerichtet, dass der ausgesendete Lichtstrahl 11 ungefähr senkrecht auf die Fahrbahn 1 bzw. Fahrbahnoberfläche 1a fällt, d.h. die optische Achse des Lichtemitterabschnitts 10a, bzw. die Lichtemitterachse 11a steht im Wesentlichen senkrecht zu der Fahrbahn 1 bzw. Fahrbahnoberfläche 1a Im dargestellten Beispiel befindet sich ein Wasserfilm 71 der Dicke d1 auf der Fahrbahnoberfläche 1a. Die Fahrbahnoberfläche kann jedoch auch schneebedeckt, vereist oder trocken sein oder eine andere Beschaffenheit haben.

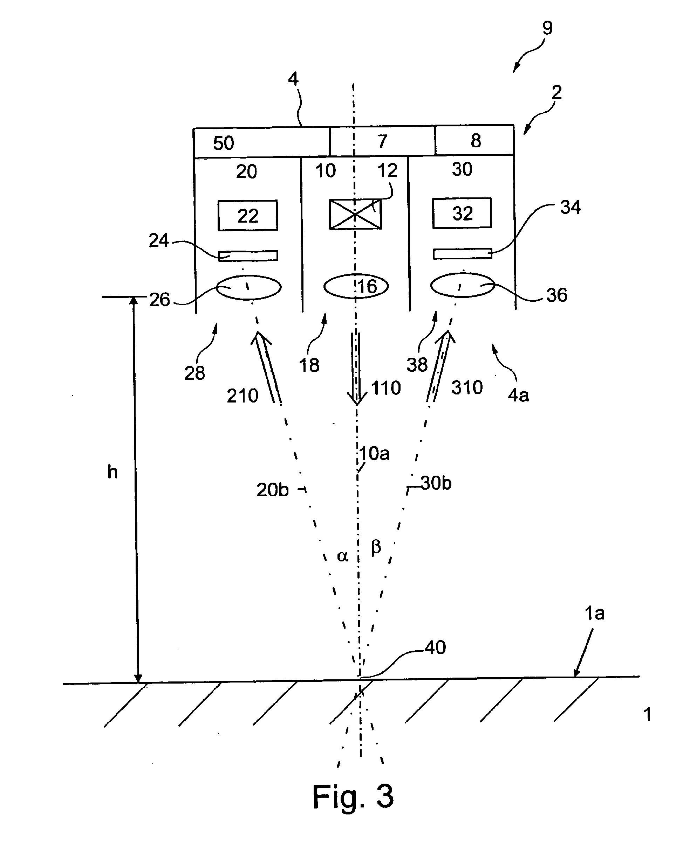

In dem in den Figuren 2 und 3 dargestellten Beispielen sind die Lichtemittereinrichtung 10, die erste Detektoreinrichtung 20 und die zweite Detektoreinrichtung 30 in einer Reihe angeordnet und die Lichtemittereinrichtung 10 ist zwischen der ersten Detektoreinrichtung 20 und der zweiten Detektoreinrichtung 30 angeordnet.

Die Lichtemittereinrichtung 10, die erste Detektoreinrichtung 20 und die zweite Detektoreinrichtung 30 können jedoch auch getrennt voneinander angeordnet sein und müssen nicht in einem Gehäuse zusammengefasst sein.

In der Lichtemittereinrichtung 10 ist eine Lichtquelleneinheit 12 angeordnet, welche zur Aussendung von Licht mehrerer unterschiedlicher Wellenlängen ausgelegt ist. Die Lichtquelleneinheit 12 kann dazu eine oder mehrere Leuchtdioden (LEDs), Laserdioden, eine andere geeignete Lichtquelle oder eine Kombination daraus umfassen und ist dazu geeignet, Licht mehrerer voneinander verschiedener Wellenlängen auszusenden. Beispielsweise kann die Lichtquelleneinheit 12 Licht zumindest mit den Wellenlängen 1300 nm, 1460 nm und 1550 nm aussenden. Die vorgesehenen Wellenlängen können jedoch dem jeweiligen Einsatzzweck angepasst werden.

Der Lichtquelleneinheit 12 ist im in der Figur 2 dargestellten Beispiel in Richtung des ausgesandten Lichtstrahls 11 ein Lichtquellenpolarisator oder Lichtquellenpolarisationsfilter 14 nachgeschaltet, welcher das von der Lichtquelleneinheit 12 ausgesandte Licht in eine vorbestimmte Richtung polarisiert.

Ferner ist eine Emitteroptik 16 vorgesehen, um das ausgesendete Licht entlang eines emittierten Lichtstrahls 11 auf einen bestimmten Bereich auf dem Untergrund oder der Fahrbahn 1 bzw. der Fahrbahnoberfläche 1a unter dem Fahrzeug 60 auszurichten bzw. zu fokussieren. Die optische Achse der Emitteroptik 16 kann die optische Achse 10a des Lichtemitterabschnitts 10 definieren. Die Emitteroptik 16 kann aus einer Emitterlinse bestehen oder mehrere Linsen und/oder andere optische Element umfassen.

Der erste Detektorabschnitt 20 umfasst einen ersten Detektor 22, beispielsweise eine oder mehrere Photodioden, dazu ausgelegt, Licht aller von der Lichtquelleneinheit 10 ausgesandten Wellenlängen zu detektieren. Der erste Detektor 22 kann dazu auch mehrere nebeneinander angeordnete Photodioden oder einen oder mehrere optoelektronische Einheiten (z.B. CCD, CMOS) umfassen.

An dem ersten Detektor 22 ist eine erste Sammeloptik 26und ein erster Polarisator oder erster Polarisationsfilter 24 angeordnet. Die erste Sammeloptik 26 kann aus einer einzelnen ersten Sammellinse bestehen oder mehrere Linsen und/oder weitere optische Elemente umfassen. Die Polarisierungsrichtung des ersten Polarisationsfilters 24 ist senkrecht zu der des Lichtquellenpolarisationsfilters 14 und damit im Wesentlichen senkrecht zu der vorbestimmten Polarisierungsrichtung. Spiegelnd reflektiertes, in der vorbestimmten Richtung polarisiertes Licht wird damit herausgefiltert und lediglich diffus reflektiertes Licht gelangt zu dem ersten Detektor 22. Der erste Detektor 22 dient somit als "Streuungsdetektor".

Eine erste Achse 20a kann im Wesentlichen der optischen Achse der ersten Sammeloptik 26 und/oder des ersten Detektorabschnitts 20 entsprechen und im Wesentlichen parallel zu der Emitterachse 10a, welche im Wesentlichen der optischen Achse der Emitteroptik 16 und/oder des Lichtemitterabschnitts 10 entspricht, ausgerichtet sein.

In dem zweiten Detektorabschnitt 30, welcher auf der dem ersten Detektorabschnitt 20 gegenüberliegenden Seite des Lichtemitterabschnitts 10 in dem Gehäuse 4 des Sensors 2 angeordnet ist, ist ein zweiter Detektor 32 angeordnet.

Der zweite Detektor 32 kann ebenfalls eine Photodiode umfassen, welche dazu ausgelegt ist, zumindest Licht einer von der Lichtquelleneinheit 12 ausgesandten Wellenlängen zu detektieren. Der zweite Detektor 32 kann jedoch ebenfalls mehrere nebeneinander angeordnete Photodioden umfassen und dazu ausgelegt sein, Licht mehrerer verschiedener Wellenlängen oder Wellenlängenbereiche zu detektieren.

Dem zweiten Detektor 32 ist eine zweite Sammeloptik 36 zugeordnet, um das reflektierte Licht auf den zweiten Detektor 32 zu fokussieren und in diesem zu detektieren. Die zweite Sammeloptik 36 kann aus einer einzelnen zweiten Sammellinse bestehen oder mehrere Linsen und/oder weitere optische Elemente umfassen. Im Gegensatz zu dem ersten Detektor 22, weist der zweite Detektor 32 im in der Figur 1 dargestellten Beispiel keinen Polarisator oder Polarisationsfilter auf. Da bereits das emittierte Licht polarisiert ist, ist dies auch nicht notwendig. Von dem zweiten Detektor wird somit diffus reflektiertes und spiegelnd reflektiertes Licht detektiert, welches entlang des zweiten Detektorstrahlengangs 31 reflektiert wird. Jedoch kann auch der zweite Detektor 32 einen Polarisationsfilter (nicht dargestellt) aufweisen, dessen Polarisationsrichtung parallel zu derjenigen des Emitterpolarisators 16 ist, um lediglich spiegelnd reflektiertes Licht in der zweiten Photodiode 36 zu detektieren.

Eine zweite Achse 30a kann im Wesentlichen der optischen Achse der zweiten Sammeloptik 36 und oder des zweiten Detektorabschnitts 30 entsprechen und im Wesentlichen parallel zu der Emitterachse 10a, welche im Wesentlichen der optischen Achse der Emitteroptik 16 und/oder des Lichtemitterabschnitts 10 entspricht, ausgerichtet sein. Der beschriebene Sensor kann im sichtbaren Lichtbereich, beispielsweise bei einer Wellenlänge von ungefähr 625 nm betrieben werden, um spiegelnd reflektiertes Licht und diffus reflektiertes Licht zu messen. Aus dem Verhältnis von dem im ersten Detektor 22 gemessenen diffus reflektierten Licht zu dem im zweiten Detektor 32 zusätzlich gemessenen spiegelnd reflektierten Licht kann auf die Fahrbahnhelligkeit und Fahrbahnrauhigkeit geschlossen werden und damit bestimmt werden, ob sich das Fahrzeug beispielsweise auf einer Asphalt- oder Betonfahrbahn befindet.

Der beschriebene Sensor kann auch im Infrarotbereich bei verschiedenen Wellenlängen verwendet werden. Hierzu kann der erste Detektor 22 und/oder der zweite Detektor 32 verwendet werden. Beispielsweise wird Infrarotlicht der Wellenlänge 1460 nm besonders gut von Wasser absorbiert, so dass Licht dieser Wellenlänge bei nasser Fahrbahn nur in geringem Maße zu dem ersten Detektor 22 bzw. dem zweiten Detektor 32 zurückreflektiert wird. Bei trockener Fahrbahn wird diese Wellenlänge dahingegen normal reflektiert. Infrarotlicht der Wellenlänge 1550 nm wird dahingegen gut von Eis absorbiert. Durch Vergleich der Reflexion dieser beiden Wellenlängen und Berücksichtigung einer Referenzwellenlänge kann auf Eis oder Wasser auf der Fahrbahn geschlossen werden. Die Referenzwellenlänge, welche weder von Eis noch von Wasser nennenswert absorbiert wird, z.B. 1300 nm, dient als Bezugsgröße zur Bewertung des Absorptionsgrades der beiden anderen Wellenlängen. Dann können die gemessenen Intensitätsverhältnisse bei den Wellenlängen 1550 nm/1300 nm mit dem Verhältnis 1460 nm/1300 nm in bekannter Weise in Relation gesetzt werden, um Informationen über Wasser und Eis auf der Fahrbahn oder eine trockene Fahrbahn zu erlangen.

Die verschiedenen Wellenlängen können parallel, insbesondere aber sequentiell zeitlich versetzt, ausgesandt werden. Somit wird jeweils nur Licht einer Wellenlänge zu einem Zeitpunkt ausgesandt und dementsprechend detektiert. Dies erlaubt es, auf eine aufwändige spektrale Analyse oder Strahlaufteilung zu verzichten.

Der Sensor 2 verfügt ferner über eine Auswerteinrichtung 50, mit welcher die von dem ersten Detektor 22 und dem zweiten Detektor 32 erfassten bzw. ermittelten Daten verarbeitet werden. Die Auswerteinrichtung 50 kann außerhalb des Gehäuses 4 angeordnet sein und sich beispielsweise an einem anderen Ort in dem Fahrzeug 60 befinden. Die Auswerteinrichtung 50 kann mit dem ersten Detektor 22 und dem zweiten Detektor 32 über ein Kabel oder eine drahtlose Verbindung verbunden sein. Die Auswerteinrichtung kann auch eine Steuerung für die Lichtquelleneinheit 21 umfassen oder mit einer Steuerung verbunden sein. Die Auswerteinheit 50 und/oder die Steuerung können jedoch auch an oder in dem Gehäuse 4 angeordnet sein bzw. in diese integriert sein, wie mit Bezug auf die Figur 2 dargestellt.

Mit dem beschriebenen Sensor 2 können mit einem kompakten und kostengünstigen Aufbau sowohl spektrale Reflexion, als auch spiegelnde und diffuse Reflexion in kurzer zeitlicher Abfolge gemessen und auf dieser Basis auf Fahrbahnart und -zustand geschlossen werden. Dadurch entsteht eine bessere und genauere Information über die Art und den tatsächlichen Zustand der Fahrbahn 1 bzw. Fahrbahnoberfläche 1 a unter dem Fahrzeug 60. Für die Messung ist nur der eine Sensor 2 erforderlich.

Soll nur spektrale Reflexion gemessen werden, da beispielsweise die Messgenauigkeit dafür ausreichend ist, kann gegebenenfalls der zweite Detektorabschnitt 30 weggelassen werden.

Ferner verfügt die Vorrichtung 9 über eine Stillstandsermittlungseinrichtung 7. Die Stillstandsermittlungseinrichtung 7 kann mit dem Oberflächensensor 2 beziehungsweise der Auswerteinrichtung 50 des Oberflächensensors 2 verbunden sein, wie mit Bezug auf die Figur 2 dargestellt oder in den Oberflächensensor 2 integriert sein, wie in Figur 3 dargestellt.

Zur Ermittlung, ob das Fahrzeug 60 steht oder zum Stillstand gebracht werden soll, kann die Stillstandsermittlungseinrichtung 7 mit Geschwindigkeitssensoren 74, welche beispielsweise an den Rädern des Fahrzeugs zur Messung der Fahrgeschwindigkeit angeordnet sind, verbunden sein und Informationen über die aktuelle Fahrzeuggeschwindigkeit beziehungsweise die Änderung der Fahrgeschwindigkeit erhalten. Die Stillstandsermittlungseinrichtung 7 kann zusätzlich oder alternativ auch mit einer Haltestellenbremse 76 verbunden sein, wie sie beispielsweise bei Bussen insbesondere im öffentlichen Nahverkehr vorgesehen sind. Diese Haltestellenbremsen 76 erlauben das Öffnen der Türen 61, 62 nur dann, wenn das Fahrzeug 60 sicher steht und die Haltestellenbremse 76 eingelegt ist. Die Haltestellenbremse 76 an sich und deren Funktionsweise ist dem Fachmann hinlänglich bekannt. Ein unbeabsichtigtes Öffnen der Türen 61, 62 kann somit verhindert werden. Eine Information, dass die Haltestellenbremse 76 aktiviert worden, kann als Stillstandsinformation durch die Stillstandsermittlungseinrichtung 7 verwendet werden.

Eine Ausgabeeinrichtung 8 ist mit der Stillstandsermittlungseinrichtung 7 und der Auswerteinrichtung 50 des Oberflächensensors 2 verbunden. Die Ausgabeeinrichtung 8 fragt Informationen von der Stillstandsermittlungseinrichtung 7 und der Auswerteinrichtung 50 in vorbestimmten Abständen ab und/oder erhält von der Stillstandsermittlungseinrichtung 7 und der Auswerteinrichtung 50 ein entsprechenden Signal, wenn erkannt wurde, dass das Fahrzeug 60 still steht oder zum Stillstand gebracht werden soll beziehungsweise wenn ein gefährlicher Untergrund 1 ermittelt wurde. Die Ausgabeeinrichtung 8 kann den Anzeigeeinrichtung 85 und/oder den Projektor 82 zur Ausgabe eines Warnsignals umfassen, wie mit Bezug auf die Figur 1 beschrieben oder ein entsprechendes Signal an eine andere Einrichtung weitergeben. Das Warnsignal kann auch einen Warnton umfassen. Die Ausgabeeinrichtung 8 kann auch ein Steuersignal ausgeben, um beispielsweise eine Türenvernegelung und/oder eine Kupplungseinrichtung für einen Anhänger nicht oder erst nach gesonderter Bestätigung freizugeben, wenn der Untergrund als gefährlich erkannt wurde.

Die Figur 3 zeigt ein weiteres Beispiel für eine Vorrichtung 9. Die mit Bezug auf die Figur 3 dargestellten und beschriebenen Merkmale können je nach Anwendung mit den mit Bezug auf die Figur 2 dargestellten und beschriebenen Merkmalen kombiniert oder ausgetauscht werden.

Der in der Figur 3 dargestellte Sensor 2 entspricht dem mit Bezug auf die Figur 2 beschriebenen Sensor mit dem Unterschied, dass kein Lichtquellenpolarisator vorgesehen ist. Der ausgesandte Lichtstrahl 110 ist in diesem Fall nicht polarisiert. Um dennoch spiegelnd reflektiertes Licht herausfiltern zu können, ist ein zweiter Polarisationsfilter 34 im Strahlengang vor dem zweiten Detektor 32 angeordnet. Die Polarisationsrichtung des zweiten Polarisationsfilters 34 ist im Wesentlichen senkrecht zu der Polarisationsrichtung des ersten Polarisationsfilters 24. Alle übrigen Elemente des Sensors 2 können denen des mit Bezug auf die Figur 1 dargestellten Sensors entsprechen.

Im in der Figur 3 dargestellten Beispiel befindet sich weder ein Wasserfilm 71 noch eine Eisschicht 72 auf der Fahrbahnoberfläche 1a.

Im in der Figur 3 dargestellten Beispiel ist die erste Achse 20b, welche der optischen Achse der ersten Sammeloptik 26 und/oder des gesamten ersten Detektorabschnitts 20 entsprechen kann, in einem Winkel α zur Emitterachse 10a ausgerichtet, wobei der Winkel α maximal ungefähr 10° beträgt. Entsprechend kann die zweite Achse 30b, welche der optischen Achse der zweiten Sammeloptik 36 und/oder des gesamten zweiten Detektorabschnitts 30 entsprechen kann, in einem Winkel β zur Emitterachse 10a ausgerichtet sein, wobei der Winkel β ebenfalls maximal ungefähr 10° beträgt. Der Schnittpunkt 40 der Emitterachse 10a mit der ersten Achse 20b und/oder der zweiten Achse 30b kann auf der Fahrbahnoberfläche 1a liegen oder in einem Abstand von bis zu 50cm von der Fahrbahnoberfläche 1a liegen.

Es besteht ferner die Möglichkeit, sowohl einen Lichtquellenpolarisator oder Lichtquellenpolarisationsfilter 14 an der Lichtquelleneinheit 12 vorzusehen, wie mit Bezug auf die Figur 1 beschrieben, als auch einen zweiten Polarisator oder zweiten Polarisationsfilter 34 an dem zweiten Detektor 32. Typischerweise sind dann die Polarisationsrichtungen des Lichtquellenpolarisationsfilters 14 und des zweiten Polarisationsfilters 34 parallel zueinander ausgerichtet. Die Polarisationsrichtungen des Lichtquellenpolarisationsfilters 14 und des zweiten Polarisationsfilters 34 des zweiten Detektors 32 sind jedoch im Wesentlichen senkrecht zu der Polarisationsrichtung des ersten Polarisators oder ersten Polarisationsfilters 24 angeordnet.

In der Figur 3 ist ferner die Auswerteinrichtung 50 innerhalb des Gehäuses 4 des Sensors 2 angeordnet bzw. in das Gehäuse 2 integriert dargestellt. Es versteht sich, dass die Auswerteinheit auch, wie in Figur 1 dargestellt, außerhalb des Sensors 2 vorgesehen sein kann.

Der Sensor 2 und insbesondere die Emitteroptik 16 und die erste Sammeloptik 26 beziehungsweise gegebenenfalls auch die zweite Sammeloptik 36 können dazu ausgelegt sein in einer bestimmten Höhe oder einem bestimmten Höhenbereich über der Fahrbahnoberfläche 1a angeordnet zu werden. Beispielsweise kann der Sensor 2 dazu ausgelegt sein in einer Höhe h beziehungsweise einem Abstand von ungefähr 10 cm bis ungefähr 1 m von der Fahrbahnoberfläche 1a angeordnet zu werden, wobei der Abstand einen jeweiligen Einsatzzweck angepasst werden kann. Für die Verwendung des Sensors 2 in einem Personenkraftwagen kann die Höhe h im Bereich von ungefähr 10 cm bis 40 cm liegen. Bei einer Verwendung des Sensors 2 in einem Nutzfahrzeug, einem Omibus oder einem Geländefahrzeug kann die Höhe h ungefähr 30 cm bis ungefähr 100 cm betragen, insbesondere in einem Bereich von 50 cm bis 80 cm.

Bei dem in der Figur 3 dargestellten Beispiel sind ferner die Stillstandermittlungseinrichtung 7 und die Ausgabeeinrichtung 8 in dem Gehäuse 4 des Sensors 2 angeordnet und mit der Auswert- bzw. Steuereinrichtung 50 verbunden oder in diese integriert.

Die Stillstandermittlungseinrichtung 7 kann wie oben beschrieben mit einem Geschwindigkeitssensor 74 und/oder einer Haltestellenbremse 76 verbunden sein.

In einem Beispiel kann der Sensor 2 auch als Bewegungssensor verwendet werden. In diesem Fall kann die Auswerteinrichtung 50 oder die Stillstandseinrichtung 7 dazu ausgelegt sein, die Lichtintensität des im ersten Detektor 22 erfassten diffus reflektierten Lichtes und/oder des im zweiten Detektor 32 erfassten reflektierten Lichtes über die Zeit zu erfassen und zu bestimmen, ob sich die Lichtintensität mehr als in einer vorgegebenen Varianz oder Schwankungsbreite ändert. Steht das Fahrzeug still, ändert sich an dem reflektierten Licht, das heißt an dem Licht das auf die erste Detektoreinrichtung 20 fällt, nichts und die Intensitätsschwankungen bleiben innerhalb einer durch den Sensoraufbau bestimmten Varianz. Solange die Intensitätsschwankung innerhalb dieser Varianz verbleibt, bewegt sich das Fahrzeug nicht. Bewegt sich das Fahrzeug jedoch auch nur langsam, so ändert sich durch die unterschiedliche Reflektion des ausgesendeten Lichts an der Fahrbahnoberfläche 1a die erfasste Lichtintensität stärker. Es kann daher ein Schwellwert beziehungsweise eine Varianz vorgesehen werden, welche es erlaubt, zwischen einer Fahrzeugbewegung und dem absoluten Fahrzeugstillstand zu unterscheiden. Damit ist es möglich, Fahrzeugbewegungen von weniger als 3 km/h oder einem m/s zu erfassen. Es ist beispielsweise auch möglich, Fahrzeuggeschwindigkeiten im Bereich von ungefähr 0,1 m/s oder weniger zu erfassen. Zum Erfassen der Fahrzeugbewegung verfügt der Sensor 2 über die Stillstandermittlungseinrichtung 7 oder kann über eine separate Steuereinrichtung verfügen. Diese Steuereinrichtung kann in einer Auswerteinrichtung 50 für den Sensor 2 oder in der Stillstandermittlungseinrichtung 7 umfasst sein oder zusätzlich an den Sensor angebracht werden, so dass ein handelsüblicher Oberflächensensor 2, 102 zu einem Bewegungssensor wird.

Die Vorrichtung 9 der vorliegenden Beschreibung auch zur Nachrüstung an bestehenden Fahrzeugen 60 ausgelegt sein.

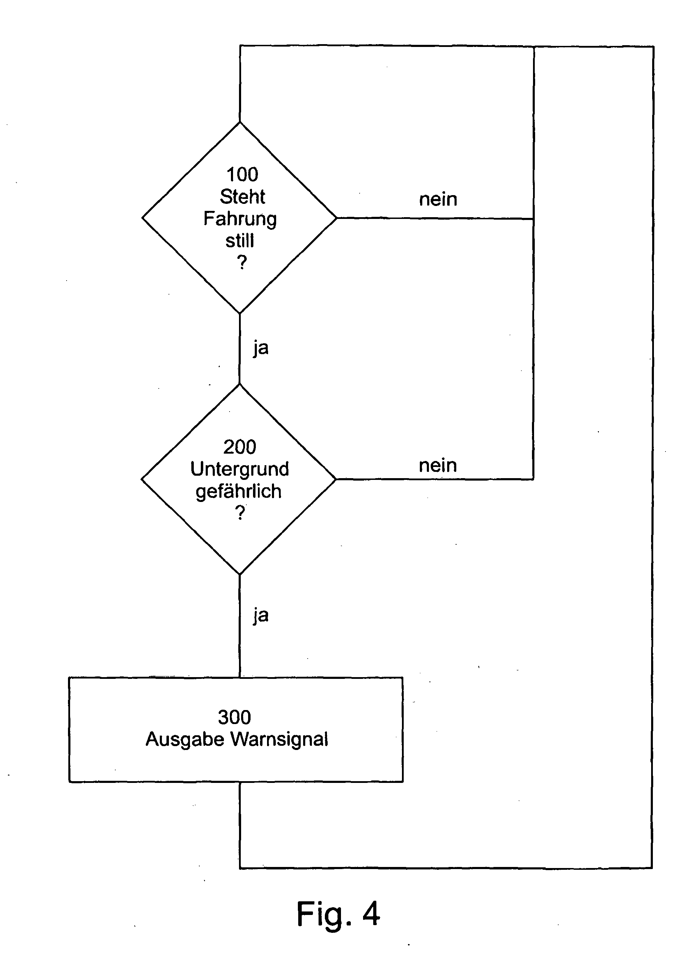

Figur 4 zeigt beispielhaft ein erfindungsgemäßes Verfahren. Das Verfahren kann beispielsweise in der Ausgabeeinrichtung 8 ausgeführt werden. In Schritt 100 wird die Stillstandsermittlungseinrichtung 7 abgefragt, ob das Fahrzeug 60 steht oder zum Stillstand gebracht werden soll. Dieser Schritt kann in vorbestimmten Intervallen wiederholt werden, oder in Abhängigkeit beispielsweise einer Bremsbetätigung oder der Betätigung eines Türöffnung.

In Schritt 200 wird der Oberflächensensor 2 abgefragt, ob ein gefährlicher Untergrund 1, beziehungsweise eine gefährliche Fahrbahnbeschaffenheit erkannt wurde. Schritt 200 kann ebenfalls periodisch in einem vorbestimmten Intervall erfolgen und unabhängig von dem Ergebnis von Schritt 100 erfolgen. Es kann jedoch auch vorgesehen sein, dass die Abfrage, ob ein gefährlicher Untergrund 1 beziehungsweise eine gefährliche Fahrbahnbeschaffenheit erkannt wurde, gemäß Schritt 200 nur dann ausgeführt wird, wenn in Schritt 100 ermittelt wurde, dass das Fahrzeug 60 steht oder zum Stillstand gebracht werden soll.

Wurde in Schritt 100 ermittelt, dass das Fahrzeug 60 steht oder zum Stillstand gebracht wurde und in Schritt 200, dass ein gefährlicher Untergrund 1 beziehungsweise eine gefährliche Fahrbahnbeschaffenheit vorliegt, wird in Schritt 300 ein Signal, beispielsweise ein Warnsignal oder ein Steuerungssignal für eine weitere Einrichtung, wie eine Anzeigeinrichtung 85 oder eine Projektor 82 ausgegeben.

Alternativ kann auch vorgesehen sein, die Schritte 200 des Feststellens, ob der Untergrund gefährlich ist, und vor oder parallel zu dem Schritt 100 der Feststellung, ob das Fahrzeug steht, oder zum Stillstand gebracht werden soll, vorzunehmen.

Die vorangehende Beschreibung wurde im Hinblick auf die in den Figuren dargestellten Beispiele gegeben. Jedoch wird der Fachmann die angegebenen Beispiele ohne weiteres modifizieren oder kombinieren und beispielsweise um weitere Warnsignale oder Steuerungssignale ergänzen. Auch wird der Fachmann weitere Anwendungsmöglichkeiten der erfindungsgemäßen Vorrichtung und des erfindungsgemäßen Verfahrens finden, beispielsweise die Anbringung an anderen Stellen eines Fahrzeugs.

Der Fachmann wird ebenfalls andere als die angegebenen Wellenlängen in Erwägung ziehen um die Messergebnisse an unterschiedliche Anforderungen anzupassen. Es versteht sich, dass die angegebenen Wellenlängen nicht auf genau die Werte eingeschränkt sind, sondern einen Wellenlängenbereich umfassen können, welcher die angegebenen diskreten Wellenlängen enthält.

## Patentansprüche

1. Vorrichtung (9) zur Ausgabe eines Signals bei gefährlichem Untergrund (1) unter einem Fahrzeug (60), wobei die Vorrichtung (9) umfasst:
einen optischen Oberflächensensor (2) zur Bestimmung zumindest eines Parameters des Untergrundes (1),
eine Stillstandsermittlungseinrichtung (7) zur Ermittlung, ob das Fahrzeug (60) steht oder zum Stillstand gebracht werden soll, und
eine Ausgabeeinrichtung (8), welche ein Signal ausgibt, wenn der Untergrund (1) anhand des zumindest einen Parameters als gefährlich ermittelt wurde und das Fahrzeug (60) steht oder zum Stillstand gebracht werden soll.

2. Vorrichtung (9) nach Anspruch 1, wobei die Ausgabeeinrichtung (8) eine Anzeigeeinrichtung (82, 85) umfasst, welche an oder in der Nähe einer Fahrzeugtür (61, 62) angeordnet ist.

3. Vorrichtung (9) nach Anspruch 1 oder 2, wobei der optische Oberflächensensor (2) an oder in der Nähe einer Fahrzeugtür (61, 62) angeordnet ist.

4. Vorrichtung (9) nach einem der vorangehenden Ansprüche, wobei der gefährliche Untergrund (1) ein weicher und/oder rutschiger Untergrund ist, insbesondere ein mit Wasser, Schnee, Eis und/oder Gras bedeckter Untergrund ist.

5. Vorrichtung (9) nach einem der vorangehenden Ansprüche, wobei der optische Oberflächensensor (2) umfasst:
- eine Lichtquelleneinheit (12) zum Aussenden von Licht von zumindest einer Wellenlänge auf den Untergrund (1) und
- zumindest einen ersten Detektor (20, 30), um von dem Untergrund (1) reflektiertes Licht zu detektieren.

6. Vorrichtung (9) nach Anspruch 5, wobei die Lichtquelleneinheit (12) und der zumindest eine Detektor (20) in einem Gehäuse (4) angeordnet sind.

7. Vorrichtung (9) nach einem der vorangehenden Ansprüche, wobei die Stillstandsermittlungseinrichtung (7) mit dem optischen Oberflächensensor (2) verbunden ist und Daten des optischen Oberflächensensors (2) verwendet.

8. Vorrichtung (9) nach einem der vorangehenden Ansprüche, wobei die Vorrichtung (9) dazu ausgelegt ist, an einem beliebigen Fahrzeug (60) angebracht zu werden.

9. Verfahren zur Ausgabe eines Signals bei gefährlichem Untergrund (1) unter einem Fahrzeug (60), wobei das Verfahren umfasst:
- Aussenden zumindest eines Lichtstrahls auf den Untergrund (110);
- Detektieren von an dem Untergrund reflektiertem Licht (120);
- Ermitteln anhand des detektieren reflektierten Lichts, ob der Untergrund gefährlich ist (200);
- Ermitteln, ob das Fahrzeug steht oder zum Stillstand gebracht werden soll (100); und
- Ausgeben eines Signals (300), wenn der Untergrund (1) als gefährlich ermittelt wurde und das Fahrzeug (60) steht oder zum Stillstand gebracht werden soll.

10. Verfahren nach Anspruch 9, wobei das Ermitteln, ob das Fahrzeug steht oder zum Stillstand gebracht werden soll, umfasst eine Betätigung einer Parkbremse, eine Betätigung einer Haltestellenbremse (76), ein Abstellen des Motors, ein Lösen eines Sicherheitsgurtes oder ein Öffnen einer Fahrzeugtür (61, 62) zu erfassen.

11. Verfahren nach Anspruch 9 oder 10, wobei das Ermitteln ob ein gefährlicher Untergrund vorliegt, zumindest eines aus dem Detektieren von Wasser, Schnee, Eis, Gras oder einem weichen Untergrund ist.

12. Verfahren nach einem der Ansprüche 9 bis 11, wobei das Aussenden des Lichts auf den Untergrund (1) im Bereich einer Fahrzeugtür (61,62) erfolgt.

13. Verfahren nach einem der Ansprüche 9 bis 12, wobei das Aussenden des Lichts Licht von zumindest einer Wellenlänge im Infrarotbereich, vorzugsweise drei Wellenlängen im Infrarotbereich umfasst.

14. Verfahren nach einem der Ansprüche 9 bis 13, wobei das Ermitteln, ob das Fahrzeug (60) steht oder zum Stillstand gebracht werden soll, anhand des detektieren reflektierten Lichts erfolgt.

## Claims

1. Device (9) for outputting a signal when there is a hazardous underlying surface (1) under a vehicle (60), wherein the device (9) comprises:
an optical surface sensor (2) for determining at least one parameter of the underlying surface (1), a stoppage ascertainment unit (7) for ascertaining, whether the vehicle (60) is stationary or is to be brought to a stop, and
an output unit (8), which outputs a signal when the underlying surface (1) has been ascertained to be hazardous on the basis of the at least one parameter and the vehicle (60) is stationary or is to be brought to a stop.

2. Device (9) according to Claim 1, wherein the output unit (8) comprises a display unit (82, 85), which is arranged on or in proximity to a vehicle door (61, 62).

3. Device (9) according to Claim 1 or 2, wherein the optical surface sensor (2) is arranged on or in proximity to a vehicle door (61, 62).

4. Device (9) according to one of the preceding claims, wherein the hazardous underlying surface (1) is a soft and/or slippery underlying surface, in particular an underlying surface covered with water, snow, ice, and/or grass.

5. Device (9) according to one of the preceding claims, wherein the optical surface sensor (2) comprises:
- a light source unit (12) for emitting light of at least one wavelength onto the underlying surface (1) and
- at least one first detector (20, 30) to detect light reflected from the underlying surface (1).

6. Device (9) according to Claim 5, wherein the light source unit (12) and the at least one detector (20) are arranged in a housing (4).

7. Device (9) according to one of the preceding claims, wherein the stoppage ascertainment unit (7) is connected to the optical surface sensor (2) and uses data of the optical surface sensor (2).

8. Device (9) according to one of the preceding claims, wherein the device (9) is designed for the purpose of being attached to an arbitrary vehicle (60).

9. Method for outputting a signal when there is a hazardous underlying surface (1) under a vehicle (60), wherein the method comprises:
- emitting at least one light beam onto the underlying surface (110);
- detecting light reflected on the underlying surface (120);
- ascertaining on the basis of the detected reflected light whether the underlying surface is hazardous (200);
- ascertaining whether the vehicle is stationary or is to be brought to a stop (100); and
- outputting a signal (300) when the underlying surface (1) has been ascertained to be hazardous and the vehicle (60) is stationary or is to be brought to a stop.

10. Method according to Claim 9, wherein the ascertainment of whether the vehicle is stationary or is to be brought to a stop comprises detecting actuation of a parking brake, actuation of a transit stop brake (76), shutdown of the engine, disengagement of a safety belt, or opening of a vehicle door (61, 62).

11. Method according to Claim 9 or 10, wherein the ascertainment as to whether a hazardous underlying surface is present is at least one of the detection of water, snow, ice, grass, or a soft underlying surface.

12. Method according to one of Claims 9 to 11, wherein the emission of the light onto the underlying surface (1) is performed in the region of a vehicle door (61, 62).

13. Method according to one of Claims 9 to 12, wherein the emission of the light comprises light of at least one wavelength in the infrared range, preferably three wavelengths in the infrared range.

14. Method according to one of Claims 9 to 13, wherein the ascertainment as to whether the vehicle (60) is stationary or is to be brought to a stop is performed on the basis of the detected reflected light.

## Revendications

1. Dispositif (9) pour délivrer un signal en présence d'un sol (1) dangereux sous un véhicule (60), le dispositif (9) comprenant :
un détecteur de surface optique (2) pour déterminer au moins un paramètre du sol (1),
un dispositif de détermination d'immobilité (7) pour déterminer si le véhicule (60) est à l'arrêt ou doit être immobilisé, et
un dispositif de sortie (8) qui délivre un signal lorsque le sol (1) a été déterminé comme étant dangereux à l'aide de l'au moins un paramètre et que le véhicule (60) est à l'arrêt ou doit être immobilisé.

2. Dispositif (9) selon la revendication 1, avec lequel le dispositif de sortie (8) comprend un dispositif d'affichage (82, 85) qui est disposé sur ou à proximité d'une portière de véhicule (61, 62).

3. Dispositif (9) selon la revendication 1 ou 2, avec lequel le détecteur de surface optique (2) est disposé sur ou à proximité d'une portière de véhicule (61, 62).

4. Dispositif (9) selon l'une des revendications précédentes, avec lequel le sol dangereux (1) est un sol meuble et/ou glissant, notamment un sol recouvert d'eau, de neige, de verglas et/ou d'herbe.

5. Dispositif (9) selon l'une des revendications précédentes, avec lequel le détecteur de surface optique (2) comprend :
- une unité source de lumière (12) pour émettre de la lumière ayant au moins une longueur d'onde sur le sol (1) et
- au moins un premier détecteur (20, 30) pour détecter la lumière réfléchie par le sol (1).

6. Dispositif (9) selon la revendication 5, avec lequel l'unité source de lumière (12) et l'au moins un détecteur (20) sont disposés dans un boîtier (4).

7. Dispositif (9) selon l'une des revendications précédentes, avec lequel le dispositif de détermination d'immobilité (7) est relié avec le détecteur de surface optique (2) et utilise les données du détecteur de surface optique (2).

8. Dispositif (9) selon l'une des revendications précédentes, avec lequel le dispositif (9) est conçu pour être monté sur un véhicule (60) quelconque.

9. Procédé pour délivrer un signal en présence d'un sol (1) dangereux sous un véhicule (60), le procédé comprenant :
- émission d'au moins un rayon lumineux sur le sol (110) ;
- détection de la lumière réfléchie sur le sol (120) ;
- détermination, à l'aide de la lumière réfléchie détectée, de si le sol est dangereux (200) ;
- détermination de si le véhicule est à l'arrêt ou doit être immobilisé (100) ; et
- délivrance d'un signal (300) lorsque le sol (1) a été déterminé comme étant dangereux et que le véhicule (60) est à l'arrêt ou doit être immobilisé.

10. Procédé selon la revendication 9, selon lequel la détermination de si le véhicule est à l'arrêt ou doit être immobilisé comprend la détection d'un actionnement d'un frein de stationnement, d'un actionnement d'un frein de point d'arrêt (76), d'un arrêt du moteur, d'un détachement d'une ceinture de sécurité ou d'une ouverture d'une portière de véhicule (61, 62).

11. Procédé selon la revendication 9 ou 10, selon lequel la détermination de la présence d'un sol dangereux est au moins la détection d'eau, de neige, de verglas, d'herbe ou d'un sol meuble.

12. Procédé selon l'une des revendications 9 à 11, selon lequel l'émission de lumière sur le sol (1) s'effectue dans la zone d'une portière de véhicule (61, 62).

13. Procédé selon l'une des revendications 9 à 12, selon lequel l'émission de lumière comprend de la lumière ayant au moins une longueur d'onde dans la plage des infrarouges, de préférence trois longueurs d'onde dans la plage des infrarouges.

14. Procédé selon l'une des revendications 9 à 13, selon lequel la détermination de si le véhicule (60) est à l'arrêt ou doit être immobilisé s'effectue à l'aide de la lumière réfléchie détectée.
